# EUROPEAN PATENT SPECIFICATION

(11) **EP 0 544 450 B1**
(45) Date of publication and mention of the grant of the patent: **27.08.1997**
(21) Application number: 92310555.5
(22) Date of filing: 19.11.1992
(51) Int. Cl.: B01J 20/32, B01J 47/00, B01J 39/16

(54) **Supported Microspheres**
Aufgetragene Mikrokugeln
Microsphins supportés

(30) Priority: 20.11.1991 IL 100105
(43) Date of publication of application: 02.06.1993
(73) Proprietor: BAR ILAN UNIVERSITY, 52900 Ramat Gan (IL)
(72) Inventor: Margel, Shlomo, Rehovot (IL)
(74) Representative: Silverman, Warren

(56) References cited:
- EP-A- 0 071 704
- EP-A- 0 346 037
- EP-A- 0 357 479
- EP-A- 0 385 587
- US-A- 3 795 313
- US-A- 4 070 283
- US-A- 4 111 838
- US-A- 4 252 644

## Description

The present invention relates to a composition of matter in which microspheres are covalently bonded to a support of solid substrate, the thus-bonded microspheres containing residual reactive functions.

Due to their spherical shape and high surface area, microspheres have numerous applications such as specific cell labelling, cell separation, phagocytosis, diagnostics, cell growth, affinity chromatography and hemoperfusion (see e.g., Margel, S., Applied Biochemistry and Biotechnology, 1983, 8, 523; Lazar, A., Silverstein, L., Margel, S. and Mizrahi, M., Dev. in Biol. Stand., 1985, 60, 456; Pines, M. and Margel, S., J. of Immunoassay, 1986, 7, 97; Palzer, R., Walton, J. and Rembaum, A., In Vitro, 1978, 14, 336; Rembaum, A. Yen, S.P.S. and Volkson, W., Chem. Tech., 1978, 8, 182). Recently, in order to improve the quality and usefulness of polymeric microspheres, significant progress has been made in the synthesis of microspheres with narrow size distribution. Highly uniform polymeric microspheres are currently effective for applications such as adsorbents for HPLC, calibration standards and spacers for liquid crystals [Ugelstad, J., Soderberg, L., Berge, A. and Bergstom, J., Nature (London), 1983, 303, 5].

From a practical point of view, the efficiency and use of polymeric microspheres in solution, particularly microspheres smaller in their diameter than approximately 0.4µm, are still limited, because of some major disadvantages, e.g., difficulties in separation of free ligand from ligand bonded to the microspheres and instability of the microspheres in solution towards agglutination. The latter disadvantage is the major reason for the difficulties obtaining while carrying out reactions with polymeric microspheres.

Polymeric microspheres covalently bonded with appropriate antibodies or lectins have been studied for mapping of cell receptors. For example, polyaldehyde microspheres in sizes ranging from 0.1µm to 0.7µm bonded with anti-thy 1,2 antibodies were used for specific labelling of T lymphocytes. Similar microspheres covalently bonded with the drug disodium chromoglycate were used for specific labelling of rat basophilic leukemia cells (Pacht, I., Mazurek, N. and Margel, S., Drug Conjugates of Polymeric Microspheres as Tools in Cell Biology, Plenum Publishing Corporation, 1982, pp. 109-123).

Polystyrene beads crosslinked with divinylbenzene of approximately 30µm diameter containing on the surface sulfate groups (negative charge) electrostatically attached to polystyrene particles of 0.1-0.5µm diameter containing quaternary ammonium groups (and which are available from Dionex Corporation), are used in ion chromatography for ion separation (Small, H., Stevens, T.S. and Bauman, W.W., Anal. Chem., 1975, 47, 1801; Gjesde, D.T. and Fritz, J.S., in "Ion chromatography", 2nd edn., Höhig, Heidelberg, 1987). These hybrid type ion exchange resins (pellicular resins) have a low capacity; moreover, the attached colloid particles are limited in their size (up to approximately 0.5µm) and can be removed from the bead core by competition reaction.

A few patents describe the adhesion of various microsphere types, e.g. glass microspheres, to an appropriate support, by impregnating the latter with the microspheres in the presence of a thickener and an adhesive agent for binding the microspheres to the support. This binding agent usually contains epoxide compounds or other adhesive materials (Seuzaret, L., FR 2,609,835; Thomson, E. et al EP 209337; Hicks, I.A. et al, US 4,548,863).

The patents literature also describes a procedure for grafting of polyacrolein microspheres having diameters of 0.01µ to 0.2µm onto the surface of organic polymers such as polystyrene, by high energy radiation (Co irradiation) process (Margel, S., IL 67619; Rembaum, A. et al, US 4,534,996). According to this process, a deaerated acrolein in aqueous solution is polymerized in the presence of an appropriate surfactant and the organic support, by the high energy source. However, this method suffers from a number of major disadvantages: (a) the need for a high energy source; (b) the mechanism for the high energy process is not clear and the process is not properly controllable; (c) the structure of the obtained composite materials is not homogeneous and distinctive, and furthermore, part of the surface of the grafted support is barely coated with microspheres, while the other part of the surface is coated heterogeneously with one or several layers of microspheres; (d) the high energy process for covalent binding of polyacrolein microspheres onto the surface of polymers is not applicable to inorganic substrates, e.g. glass, semiconductive materials such as silicon, and some organic polymers such as polytetrafluoroethylene; (e) the high energy process is not applicable for binding onto the surface of solid substrates, microspheres which were previously prepared.

The present invention relates to compositions of matter which incorporate microspheres, while avoiding the disadvantages of the prior art products.

The present invention accordingly provides a composition of matter which comprises a solid substrate, not being an ion exchange resin, said substrate having covalent bonds provided by connecting non-polymeric ligands to at least one member selected from sub-groups (a) and (b), namely: (a) substantially a single layer of microspheres containing residual reactive functions; (b) a multiplicity of layers of microspheres, wherein adjoining layers of the multiplicity of layers are covalently linked together by covalent ligands, the innermost layer of the multiplicity of layers having the above-mentioned covalent bonds to the solid substrate connected thereto, while at least the outermost layer of the multiplicity of layers contains residual reactive functions; which microspheres are constituted by either a single specie or more than one specie of microsphere, the microspheres having a diameter within the range of 0.03 to 8µ. The covalent bonds referred to above may be provided by a ligand denoted "(A)", and the adjoining layers of the multiplicity of layers may be covalently linked together by a connecting ligand denoted "(B)", the ligands (A) and (B) being the same as or different from each other.

The microspheres included in the present compositions are preferably organic polymeric microspheres, but alternatively inorganic microspheres whether polymeric or not, such as glass and silica, are also deemed to be within the scope of the present invention.

It will be apparent that the at least one species of microspheres may consist of substantially a single specie, or alternatively may consist of more than one specie. Moreover, when there is present in the inventive compositions a multiplicity of microsphere layers, this may consist of substantially the same specie of microspheres or may include different species of microspheres. More particularly, each layer of the multiplicity of layers may contain substantially only a particular specie of microspheres, or alternatively, at least one layer of the multiplicity of layers may include more than one specie of microspheres.

The present invention provides new structures using microspheres in combination with a solid substrate and having enhanced immobility characteristics for external matter. They are distinguished from structures of superficial similarity disclosed in many prior art documents such as the following:-
EP 0385587 describes an ion-exchange composition comprising synthetic resin support particles, dispersant and fine synthetic resin layering particles. The dispersant may be connected to the support particles and/or the fine particles by covalent bonds.
US 4111838 describes a chromatographic material comprising polysaccharide particles, of size is in the range of about 25-300µm, covalently attached to an inorganic support.
US 4252644 describes a process for the chromatographic separation of ions using a composition of ion-exchange resin ("component A") and a finely-divided material ("component B") having ion-exchange sites attracting available sites of component A, whereby component B forms an irreversibly attached monolayer on component A, i.e. it is stable to aqueous 0.5M NaOH.
EP 0071704 describes systems having a high surface area and reactive groups, capable of binding substrates having nucleophilic groups, which comprise a polymer latex (the polymer containing the reactive groups), which is either aggregated itself or attached to a carrier, as, e.g., by a covalent bond formed by reaction of an oxiran group in the polymer with a cellulosic OH group in e.g. a paper or wadding carrier.
EP 0346037 describes an ion exchange composition comprising support particles with no ion-exchange capacity and hydrophobic ion-exchange functionalist particles hydrophobically bound thereto, i.e. physically.
US 4070283 describes a powder composed of macroparticles comprising an impervious macro core, at least two monolayers of microparticles adhered to the core and at least two layers of ultramicroparticles adhered to the surface of the microparticles. The layers are apparently adhered initially electrostatically and eventually by sintering at a high temperature.
EP 0357479 describes a granular material produced by impregnating an electrically charged granular substrate, with a first hydrophilic polymex carrying the same quantity of opposite charges (thus forming an electrostatic bond), the resultant composite then being irreversibly chemically (i.e covalently) bonded to a second hydrophilic and biofunctional polymer.

For a better understanding of the invention and to show how the same may be carried into effect, reference will now be made, by way of example, to the accompanying drawings, wherein:
Figure 1 shows an SEM photomicrograph depicting an embodiment of the invention in which polyacrolein microspheres are covalently bound to glass discs.
Figure 2 shows SEM photomicrographs depicting embodiments of the invention in which polyacrolein microspheres are covalently bound to polyethylene (PE) film, namely, (a) an unmodified PE surface, (b) a PE[CO₂H] surface, (c) PE[CH₂OSi<(CH₂)₄NH₂] surface, (d) a PE[CH₂OSi<(CH₂)₄NH₂] surface already bonded to polyacrolein microspheres.

The present compositions, which incorporate supported microspheres, have many potential applications, for example those already outlined above where the use of microspheres is already known per se. Also, e.g. the present inventive compositions can be used to immobilize drugs, prodrugs, enzymes, proteins, antibodies and biological cells, merely by way of illustration. It is to be understood that immobilization of any of these materials may be effected by creation of chemical bonds, e.g. covalent, ionic and/or coordinate bonds between reactive functions therein and the residual reactive functions of the supported microspheres. Alternatively or additionally, however, these materials may have merely a physical connection with the supported microsphere compositions, e.g. they may be adsorbed thereon and/or entrapped therein, thus the term "immobilization" is to be understood broadly as denoting chemical bonding and/or physical connection.

The microspheres themselves may be made of, e.g., polyacrolein, polyglutaraldehyde, poly(chloromethylated) styrene, albumin or silica, and may have a wide or narrow size distribution, as desired. The compositions or the microspheres which they incorporate may be designed with a variety of physical properties as regards, for example, biodegradability, rigidity or porosity. The solid substrates to which the microspheres are covalently bonded may in turn be made from a variety of materials, such as, for example, organic polymers (e.g. polyalkenes such as polyethylene), inorganic polymers such as glasses, or semiconductive materials such as silicon. Where the bonding between the microspheres and the solid substrates and/or the linkage between adjacent layers of microspheres in a multilayer system, is/are provided by ligands, these may have, e.g., omega-functional groups such as amino, cyano, trialkoxysilyl, trihalosilyl, formyl, haloalkyl, hydroxyalkyl, isocyanato, carboxyl or derivatives of carboxyl such as alkoxycarbonyl, halocarbonyl or hydrazidocarbonyl.

It will be apparent to persons skilled in the art that the compositions of the invention may be prepared in any convenient way. For example, a ligand can be covalently bonded to a solid substrate at one end of the ligand, and the other end of the ligand may be covalently attached to microspheres. More than one layer of microspheres may be assembled in a similar manner. It may be necessary to pretreat the substrate material to impart chemical activity to the surface thereof, for subsequent chemical reaction with a suitable ligand and/or reactive microspheres. It will also be appreciated that the reactions described are carried out in such manner as to leave a monolayer of microspheres, or at least the outer layer of a microsphere multilayer, with residual reactive functions. It will further be appreciated by skilled persons that residual reactive functions (such as those illustrated above) can be converted by methods known per se to other reactive functions. There now follows a description of exemplary but non-limiting starting materials.

### Microsphere Starting materials

Monodispersed silica microspheres of various sizes were obtained from Merck, Darmstadt, Germany. Monodispersed polyacrylic acid microspheres were purchased from Polysciences, Warrington, PA, U.S.A. Polyglutaraldehyde microspheres and polyacrolein microspheres of various types (non-fluorescent, fluorescent and magnetic) and diameters were prepared according to a published method (Margel, S., Meth. in Enzymol., 1985, 112, 164). Poly (chloromethylated styrene) microspheres were prepared according to a published procedure (Margel, S., Nev, E. and Fisher, I., J. Poly. Sci. Chem. Ed., 1991, 29, 347). Albumin microspheres were prepared according to a published method (Longo, W.E., Iwata, H., Lindheimer, T.A. and Goldberg, E.P., J. Pharm. Sci. 1982, 71(12), 1323; Kanzia, J., Scholz, W., Anderson, M.J.. and Ruchholz, W.M., J. Immun. Meth. 1984, 75, 31.

### Surface Treatment of Substrate Materials

Glass substrates were washed with either aqueous NaOH solution (10%) or with aqueous HF solution at pH 3, followed by extensive washing with water and appropriate organic solvents (e.g. chloroform and/or ethanol). In most cases, the glass substrates were plasma treated before the surface modification. Silicon wafers were washed with appropriate organic solvents (e.g. chloroform and/or ethanol) and were then plasma treated before the surface modification. Polyethylene substrates, as well as cellulose substrates, were each washed with appropriate organic solvents (e.g. chloroform and/or ethanol) and were subsequently stored under anhydrous conditions.

### Reactive Ligands

The following were purchased from ABCR, Karlsruhe, West Germany: Cl₃Si(CH₂)₁₇CH₃, (MeO)₃Si(CH₂)₁₇CH₃, Cl₃Si(CH₂)₃CN, (MeO)₃Si(CH₂)₃CN, (MeO)₃Si(CH₂)₃NH₂, Cl₃Si(CH₂)₃CO₂Me and (MeO)₃Si(CH₂)₃CO₂Me and p-Cl₃SiC₆H₄CH₂Cl.

Cl₃Si(CH₂)₁₆CN was synthesized by a procedure similar to that described by Balachander, N. and Sukenik, C.N., Tet. Let., 1988, 29, 55, as follows:

CH₂=CH(CH₂)₈CH₂Br + CH₃CuI/Mg → CH₂=CH(CH₂)₈CH₂CuCH₃MgBr

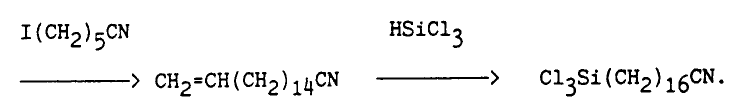

Synthesis of Cl₃Si(CH₂)₁₆CO₂Me was accomplished similarly, using I(CH₂)₅CO₂Me instead of I(CH₂)₅CN.

### Surface Modification of the Substrates

Ligands of the type p-Cl₃SiC₆H₄CH₂Cl, Cl₃Si(CH₂)ₙX and/or (RO)₃Si(CH₂)ₙX, where n = 3 to 16 and X = CN, NH₂ or CO₂Me, were covalently bonded to the surface of the cleaned substrates (e.g. glass, silicon, cellulose and polyethylene containing OH functionality on its surface), by shaking these substrates with an organic solvent containing the appropriate ligand(s). The substrates were then removed from the solvent and washed a few times with ethanol and/or chloroform. In some cases, the washing also included Soxhlet treatment for a few hours. The ligand concentration in the organic solvents was usually above 0.01% w/v and in most cases above 0.1% w/v. Exemplary organic solvents are bicyclohexyl, chloroform, methylene chloride and toluene, but other solvents may of course be used. The reaction is carried out in most cases at room temperature. However, similar results can also be obtained at both lower and higher temperatures, e.g. up to the boiling point of the solvent. Ligands of the type (RO)₃Si(CH₂)ₙX, where n = 3 could also be bonded to the above substrates, by shaking the appropriate substrate with the ligand in aq. medium, e.g. for several hours at 90°C, using 0.1M sodium acetate, pH 5.5; the bonded substrate is then washed with water, ethanol and chloroform successively (Wikstrom P., Mandenius C.F. and Larsson P.O., J. of Chromatography, 1988, 455, 105).

Scheme 1 describes some of the surface modifications effected at substrate surfaces containing hydroxyl functionality, e.g., glass, cellulose, Si and modified polyethylene (PE). Cleaned surfaces containing hydroxyl functionality may be reacted with ligands such as Cl₃Si(CH₂)ₙX or (RO)₃Si(CH₂)ₙX where X is, e.g., CO₂Me or CN, according to procedures described above, in order to obtain surfaces having omega- ester or cyano functionality. The ester groups can be converted to free carboxyl by soaking the substrates containing the omega- ester groups in 0.1N aqueous HCl solution, for 1 hour at room temperature; after removal from the aqueous solution, the substrate was washed extensively with water, acetone and chloroform, successively. The ester groups can be converted to hydrazide groups by soaking the substrates containing the omega- ester groups in concentrated hydrazine hydrate solution for 2 hours at 50°C; after removal from the 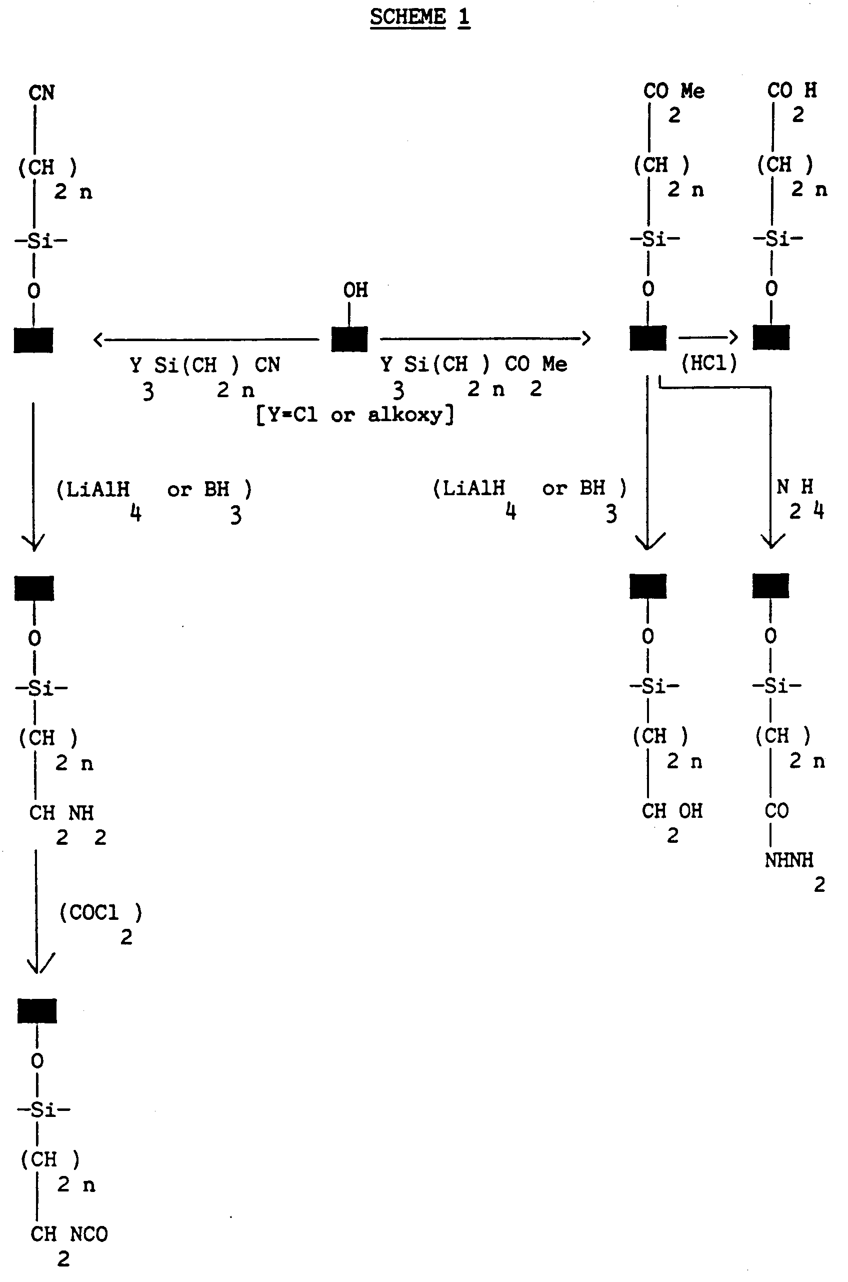 aqueous solution, the substrate was washed extensively with water, acetone and chloroform, successively. The ester groups can be converted to CH₂OH groups by dipping the substrates containing the omega- ester groups in LiAlH₄ or BF₃ in tetrahydrofuran (THF) for a few hours at room temperature or at higher temperatures, e.g. up to 50°C; after removal from the THF solution, the substrate was washed extensively with water, acetone and chloroform, successively.

The cyano groups can be converted to CH₂NH₂ groups by reducing the substrates containing the omega- cyano groups with LiAlH₄ or BF₃, as just described. The amino groups can be converted to isocyanate groups by soaking the thus-obtained substrates containing the omega- amino groups in a 20% toluene solution of phosgene, for a few hours at room temperature; after removal from the toluene solution, the substrate was washed extensively with water, acetone and chloroform, successively.

Surfaces provided with chloromethyl groups were prepared by reacting surface hydroxyl groups with ligands such as Cl₃SiC₆H₄CH₂Cl according to previously described procedures. The formed surface chloromethyl groups were converted to aldehyde using a published method (Syper, L. and Meochowski, J., Synthesis, 1984, 747).

As shown in Scheme 2, polyethylene and polypropylene surfaces are oxidized according to a published method (Whitesides, G.M. and Ferguson, G.S., Chemtracts-Organic Chemistry, 1988, 1, 171). Briefly, these substrates are oxidized by dipping them in H₂SO₄/H₂O/CrO₃ (29:42:29 weight ratio) solution at 70°C for 2 minutes, followed by washing with water and acetone. Alternatively, plasma treatment of polyethylene or polypropylene results in the formation of surface hydroxyl functionality.

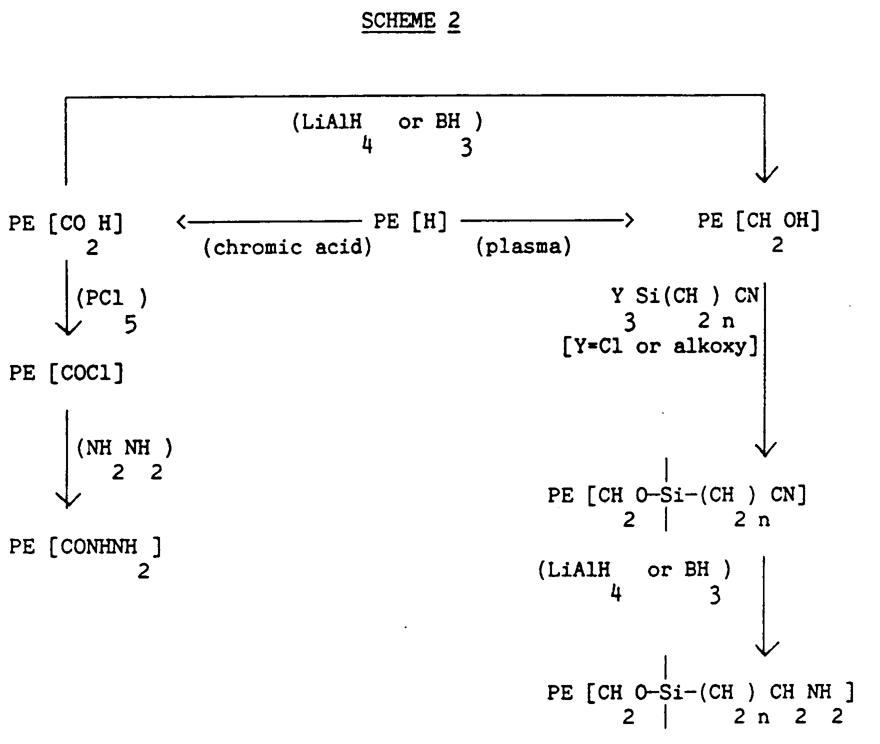

Polyethylene and polypropylene containing surface halocarbonyl groups (e.g. PE[COCl]) are obtained by dipping the oxidized polymer e.g. PE[CO₂H], in 10ml. dry ether containing 1 g. PCl₅ for 1 hour at room temperature. The PE[COCl] (e.g.) is then removed from the ether solution and is used immediately, without further washing, for the next modification of the substrate surface.

Polyethylene and polypropylene containing surface hydrazide groups (e.g. PE[CONHNH₂]) are obtained by soaking the PE[COCl] (e.g.) in dry dimethylformamide solution containing 10% w/v hydrazine hydrate at room temperature for one hour. The substrate is then removed from the DMF solution and washed extensively with water, acetone and chloroform, successively.

Solid substrates such as polyethylene, polypropylene, glass and Si, containing surface isocyanate functionality (e.g. PE[NCO]) are obtained by soaking such substrates containing surface primary amine or hydrazide functionality, in dry toluene solution containing 20% phosgene at room temperature for 1 hour. The substrates are then quickly removed and used immediately for the covalent binding of appropriate polymeric microspheres.

Sensitive surface analytical methods e.g. ESCA. FTIR-ATR, ellipsometry and contact angle measurements [Balachander, N. and Sukenik, C.N., Tet. Let., 1988, 29, 55; Bain, C.D. and Whitesides, G.M., Angew. Chem. Int. Ed. Engl., 1989, 28(4), 506] prove the binding of the ligands to the substrates and the presence of the desired omega-functional groups, e.g. adsorption peak in the IR at 1750 cm.⁻¹ for ester groups. Scanning electron microscopy pictures are usually used to demonstrate the binding of the microspheres onto the modified substrates.

The invention will now be further illustrated by the following non-limiting Examples.

### EXAMPLE 1

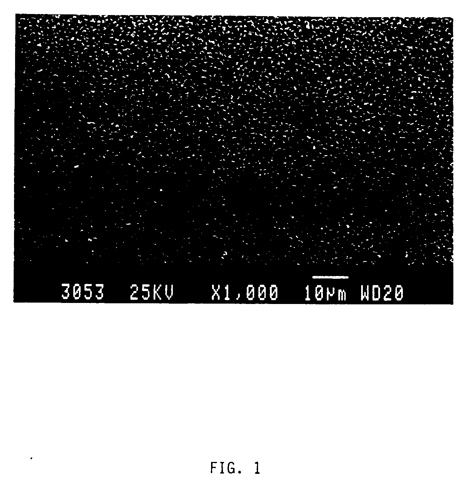

Glass discs containing surface covalent-bound amine functionality, prepared by reaction of Cl₃Si(CH₂)₃CN and/or (MeO)₃Si(CH₂)₃CN with surface OH groups, followed by reduction of CN to CH₂NH₂, were soaked at room temperature for 12 hours in an aqueous solution containing 1% w/v monodispersed polyacrolein microspheres of 0.7µ average diameter. The glass discs were then removed from the aqueous solution and washed extensively with water. Scanning electron microscopy (SEM) demonstrated the coverage of the glass discs with a monolayer of polyacrolein microspheres (Fig. 1). This monolayer is stable and is not removed by repeated washing with cold water and/or boiling chloroform, or by prolonged treatment with chloroform in a Soxhlet apparatus.

When a similar experiment was carried out using polyacrolein microspheres which had been pretreated with NaBH₄ to reduce CHO groups to CH₂OH, less than 3% of the surface of the glass discs was covered with microspheres.

### EXAMPLE 2

Example 1 was repeated, substituting for the 1% microspheres solution, 10⁻³%, 10⁻¹% and 10% w/v solutions. The percentage coverage obtained was <5%, >25% and >30%, respectively.

### EXAMPLE 3

Example 1 was repeated. The washed glass discs were subsequently soaked for 12 hours in an aqueous solution containing 0.1% w/v of fluorescent polyacrolein microspheres (FITC-labelled) of 0.1µ average diameter, removed from this solution and washed extensively with water. The glass discs were highly fluorescent in a fluorescent microscope, and SEM photomicrographs showed that the 0.1µ fluorescent microspheres were bonded to the glass surfaces in between the spaces of the 0.7µ microspheres previously bonded to the glass.

### EXAMPLE 4

When Example 1 was repeated using Cl₃Si(CH₂)₁₆CN instead of Cl₃Si(CH₂)₃CN, the percentage coverage decreased by approximately 10%.

### EXAMPLE 5

When Example 1 was repeated, using microspheres of average diameter 0.03, 0.05 , 0.4, 2.0 and 7.5µ, instead of 0.7µ, similar results were obtained for the first three sizes, but the percentage coverage for the 7.5µ diameter microspheres was below 20%, that is to say significantly less than in the other cases.

### EXAMPLE 6

When Example 1 was repeated, using instead of the 0.7µ polyacrolein microspheres, fluorescent microspheres (rhodamine-labelled) and/or magnetic microspheres of 0.2µ average diameter, similar results were obtained.

### EXAMPLE 7

When Examples 1-6 were repeated, using Si wafers instead of glass discs, similar results were obtained.

### EXAMPLE 8

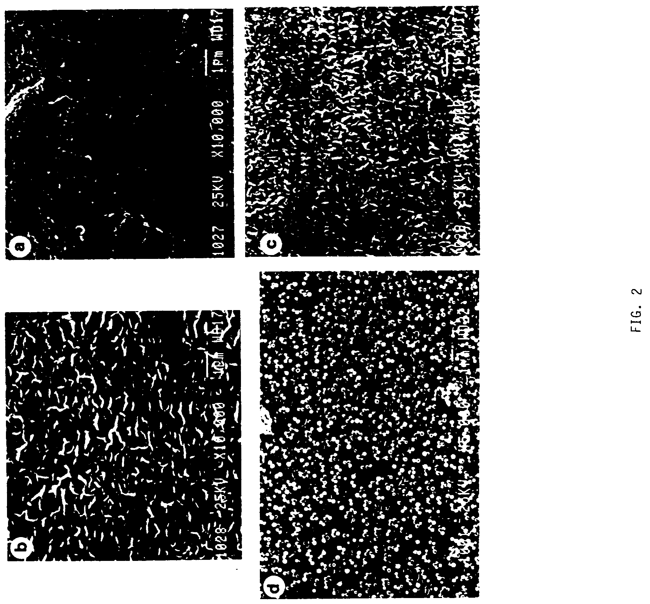

Example 1 was repeated, using polyethylene film instead of the glass discs and polyacrolein microspheres of 0.4µ (instead of 0.7µ) average diameter. Fig. 2 shows SEM photomicrographs demonstrating the gradual changes on the polyethylene film surface, during the progression of the microsphere coating process.

### EXAMPLE 9

When Examples 1-6 were repeated, using polyethylene and/or polypropylene film instead of glass discs, similar results were obtained, except that in most cases, the percentage coverage of the substrate surfaces by the microspheres was approximately 10% to 30% lower.

### EXAMPLE 10

When Examples 1 and 5 were repeated, using instead of the glass discs, glass tubes of 1 ml. capacity, glass flasks of 5 ml. capacity, or glass fibers of approximately 1 mm. diameter, similar results were obtained.

### EXAMPLE 11

When Example 9 was repeated, using as substrate in place of the film, polyethylene fibers of approximately 1 mm. diameter, similar results were obtained.

### EXAMPLE 12

When Example 1 was repeated, using polyglutaraldehyde microspheres instead of polyacrolein microspheres, similar results were obtained.

### EXAMPLE 13

When Example 1 was repeated, using an ethanol solution containing microspheres in place of the corresponding aqueous solution, similar results were obtained.

### EXAMPLE 14

When Example 1 was repeated, using polyacrylic acid microspheres instead of polyacrolein microspheres, similar results were obtained.

### EXAMPLE 15

When Example 8 was repeated under basic conditions at pH 11.5 (in presence of diisobutylethylamine) using poly (chloromethylated styrene) microspheres instead of polyacrolein microspheres, similar results were obtained.

### EXAMPLE 16

When Examples 1, 5 and 15 were repeated, using substrates containing surface hydrazide (instead of amine) functionality, similar results were obtained.

### EXAMPLE 17

When Example 15 was repeated, using instead of the aqueous microsphere solution a CCl₄ microsphere solution, similar results were obtained, except that the bonded microspheres tended to be clustered rather than separated.

### EXAMPLE 18

When Example 1 was repeated, using glass discs containing isocyanate functionality instead of amine functionality, and additionally replacing the polyacrolein microspheres in water by silica microspheres of 0.25µ average diameter in dry toluene, similar results were obtained.

### EXAMPLE 19

When Example 18 was repeated at 50°C, using polyethylene film containing surface halocarbonyl groups in place of the glass discs containing isocyanate groups, similar results were obtained.

### EXAMPLE 20

Example 1 was repeated, using glass discs containing aldehyde functionality instead of amine functionality, and additionally replacing the polyacrolein microspheres by albumin microspheres of approximately 0.1 µ average diameter. Scanning electron microscopy photomicrographs demonstrated the binding of the microspheres to the glass. When a similar experiment was carried out, using glass discs that were coated with amine functionality and/or were not coated at all, the microspheres did not bond significantly to the glass discs.

### EXAMPLE 21

When Examples 1 and 5 were repeated using (MeO)₃Si(CH₂)₃NH₂ which has been coated onto glass discs in aqueous solution instead of Cl₃Si(CH₂)₃CN, similar results were obtained.

### EXAMPLE 22

Example 21 was repeated using microspheres of approximately 0.05 and 0.4 µ and Eliza Titer plates (immuno plates of NUNC, Denmark), instead of glass discs. Scanning electron microscopy photomicrographs, as well as fluorescent markers (made by reacting aminoacridine with the supported microspheres) demonstrated the binding of the microspheres to the titer plates.

When a similar experiment was carried out, using titer plates that were not coated with (MeO)₃Si(CH₂)₃NH₂, the microspheres did not bond significantly to the titer plates.

### EXAMPLE 23

Multiple layers of microspheres can be bonded onto a solid substrate by (e.g.) binding a second layer of bivalent or polyvalent reactant onto reactive sites on the surface of the first layer of microspheres, followed by a second layer of microspheres, and so on. Thus, a second layer of polyacrolein microspheres was established by first reacting Cl₃Si(CH₂)₁₆CN with the initial monolayer of polyacrolein microspheres bonded to glass discs, obtained as described in Example 1, then reducing the free CN groups derived from the reactant to CH₂NH₂ groups, and finally bonding a second layer of polyacrolein microspheres of 2µ average diameter, as described in Example 1.

### EXAMPLE 24

Cationic ion exchange resins were produced by oxidizing the aldehyde groups of the bonded polyacrolein microspheres, to carboxyl groups. The oxidation was effected by passing oxygen for 6 hours through a 0.1M NaOH aqueous solution containing the substrate-bonded polyacrolein microspheres.

### EXAMPLE 25

Cationic ion exchange resins were also obtained by the covalent binding of 1-aminopropanesulfonic acid (1-APSA) to the substrate-bonded polyacrolein and/or poly (chloromethylated styrene) microspheres. This was accomplished by soaking the substrate-bonded microspheres for 12 hours at room temperature in aqueous solution at pH 11, containing 100 mg. of 1-APSA. The thus-modified substrate-bonded microspheres were then removed and washed extensively with water followed by acetone. Anionic exchange resins were obtained in similar manner, by using N,N-diethylaminoethylamine (DEAE) in place of the 1-APSA.

### EXAMPLE 26

In this example, a radiolabelled protein is immobilized at the surface of glass disc substrate-bonded polyacrolein or polyglutaradehyde microspheres, average diameter about 0.3µ, prepared as described in Examples 1, 12 and 16, respectively, by shaking the thus-supported microspheres for 24 hours at room temperature with a saline solution (0.5 ml.) containing ¹²⁵I-Bungarotoxin (64 µg.), followed by repeated washing (decantation) with saline solution to remove unbound ¹²⁵I-Bungarotoxin. A Γ counter showed that approximately 1,300 picomoles/cm.² protein was bonded to each of the supported microsphere systems.

When a control experiment was carried out, in which the supported microsphere system was first pretreated with NaBH₄ (to reduce the aldehyde groups), it was found that only about 5 picomoles/cm² ¹²⁵I-Bungarotoxin was bonded to each of the supported microsphere systems.

### EXAMPLE 27

When Example 26 was repeated, but using Protein A instead of Bungarotoxin, similar results were obtained. The product could then be used for removing trace amounts of immunoglobulins.

### EXAMPLE 28

Poly (chloromethylated styrene) microspheres bonded to polyethylene film, prepared according to Example 15, were shaken for 24 hours at 50°C with an aqueous solution of 0.1% (w/v) deferoxamine at pH 11.5, unbonded deferoxamine was removed by repeated water washing (decantation). The immobilized deferoxamine product could be used for the removal of traces of FeCl₃ from aqueous solutions.

### EXAMPLE 29

Substrate-bonded microspheres prepared according to Examples 1 and 15 were soaked for a few hours at room temperature in an aqueous solution containing 0.1% phenol red. The colored product was washed several times with benzene and then air dried. On introducing into water, the phenol red slowly diffused therefrom, so that the intensity of the red color in water increased gradually. This illustrates the possibility of using such products for controlled release purposes.

### EXAMPLE 30

Substrate-bonded microspheres prepared according to Example 1 were treated with gelatin at pH 7.0, in a similar manner to the procedure of Example 26. The product was shaken for 1 hour with a physiological solution (PBS) containing 1% fixed human red blood cells, then washed several times with PBS. The attached red blood cells showed up clearly under the microscope. This demonstrates the potential use of the supported microspheres of the present invention for cell immobilization, and thus also for cell growth.

### EXAMPLE 31

The wells of Eliza titer plates coated with polyacrolein microspheres of 800 Angstrom units average diameter were incubated at room temperature for approximately 15 minutes with 0.1 ml PBS solution containing 0.1 µg sheep immunoglobulins (SIgG). The Eliza plates were then washed thoroughly with PBS. Residue aldehydes and amines were blocked by incubating the plate/microsphere supported SIgG with 1% bovine serum albumin and 1% ethanolamine in aqueous solution. Biotinylated antibodies against the SIgG were determined by using a common Eliza procedure of interacting the supported SIgG with serial dilutions of the biotinylated antibodies against SIgG; this was followed by reaction of the SIgG-bound antibodies with Extravidin peroxidase. The detection limit of this system was approximately 1 ng.

When similar experiments were performed using non-coated Eliza titer plates and/or Eliza titer plates coated with amines instead of plates coated with microspheres, the detection limit was decreased significantly.

## Claims

1. A composition of matter which comprises a solid substrate not being an ion exchange resin, said substrate having covalent bonds provided by connecting non-polymeric ligands to at least one member selected from sub-groups (a) and (b), namely:
(a) substantially a single layer of microspheres containing residual reactive functions;
(b) a multiplicity of layers of microspheres, wherein adjoining layers of said multiplicity of layers are covalently linked together by covalent ligands, the innermost layer of said multiplicity of layers having said covalent bonds to said solid substrate connected thereto, while at least the outermost layer of said multiplicity of layers contains residual reactive functions;
which microspheres are constituted by either a single specie or more than one specie of microsphere, the microspheres having a diameter within the range of 0.03 to 8µ.

2. A composition of matter according to claim 1, wherein at least one of the following conditions (i), (ii) and (iii) applies, namely:
(i) said microspheres are polymeric microspheres;
(ii) at least some of said residual reactive functions has been converted by methods know *per se* to other reactive functions; and
(iii) at least some of said residual reactive functions has been utilized to immobilize at least one member selected from drugs, prodrugs, proteins and biological cells.

3. A composition of matter according to either claim 1 or 2, wherein said covalent ligands providing said covalent bonds from said substrate and said covalent ligands providing said covalent links between said multiplicity of layers are the same as or different from each other.

4. A composition of matter according to claim 3, wherein said covalent bonds are provided by a connecting ligand (A) and said multiplicity of layers are covalently linked together by a connecting ligand (B), said ligands (A) and (B) being the same as or different from each other.

5. A composition of matter according to any of claims 1 to 4, wherein said at least one species consists of substantially a single species.

6. A composition of matter according to any of claims 1 to 4, wherein said at least one species consists of more than one species.

7. A composition of matter according to any of claims 1 to 4, wherein said multiplicity of layers consists of substantially the same species of microspheres.

8. A composition of matter according to any of claims 1 to 4, wherein said multiplicity of layers includes different species of microspheres.

9. A composition of matter according to claim 8, wherein each layer of microspheres contains substantially only a particular species of microspheres.

10. A composition of matter according to claim 8, wherein at least one layer of said multiplicity of layers includes more than one species of microspheres.

## Patentansprüche

1. Stoffzusammensetzung, umfassend ein festes Substrat, das kein Ionenaustauscherharz ist, das aber kovalente Bindungen besitzt, bereitgestellt durch Verknüpfen von nicht-polymeren Liganden mit mindestens einem Glied, das ausgewählt ist aus den Untergruppen (a) und (b), das heißt, aus
(a) einer im wesentlichen einzelnen Schicht von Mikrosphären, die verbliebene reaktive Funktionen aufweisen,
(b) einer Anzahl Mikrosphärenschichten, wobei aneinander liegende Schichten der Anzahl Schichten durch kovalente Liganden miteinander kovalent verknüpft sind und die am meisten innenliegende Schicht der Anzahl Schichten kovalente Bindungen zum damit verknüpften festen Substrat hat, während die äußerste Schicht der Anzahl Schichten verbliebene reaktive Funktionen aufweist;
wobei die Mikrosphären entweder von einem einzigen Typ oder von mehr als einem Mikrosphärentyp sind und einen Durchmesser von 0,03 bis 8 µm haben.

2. Stoffzusammensetzung nach Anspruch 1, wobei zumindest eine der folgenden Bedingungen (i), (ii) und (iii) zutrifft, nämlich: (i) die Mikrosphären sind Polymer-Mikrosphären; (ii) zumindest einige der verbliebenen reaktiven Funktionen wurden mit an sich bekannten Verfahren in andere reaktive Funktionen umgewandelt; und (iii) zumindest einige der verbliebenen reaktiven Funktionen wurden verwendet, um mindestens einen Vertreter zu immobilisieren aus der Gruppe mit Arzneien, Arznei-Vorstufen, Proteine und biologische Zellen.

3. Stoffzusammensetzung nach Anspruch 1 oder 2, wobei die kovalenten Liganden, die die kovalenten Bindungen des Substrates bereitstellen, und die kovalenten Liganden, die die kovalenten Verknüpfungen innerhalb der Anzahl Schichtenbereitstellen, gleich sind oder zueinander verschieden.

4. Stoffzusammensetzung nach Anspruch 3, wobei die kovalenten Bindungen bereitgestellt werden von einem Verknüpfungsliganden (A) und die Anzahl Schichten kovalent miteinander verküpft sind durch einen Verknüpfungsliganden (B), wobei die Liganden (A) und (B) gleich sind oder zueinander verschieden.

5. Stoffzusammensetzung nach einem der Ansprüche 1 bis 4, wobei zumindest ein Typ aus im wesentlichen einem einzelnen Typ besteht.

6. Stoffzusammensetzung nach einem der Ansprüche 1 bis 4, wobei zumindest ein Typ aus mehr als einem Typ besteht.

7. Stoffzusammensetzung nach einem der Ansprüche 1 bis 4, wobei die Schichten im wesentlichen aus dem gleichen Mikrosphärentyp bestehen.

8. Stoffzusammensetzung nach einem der Ansprüche 1 bis 4, wobei die Schichten verschiedene Mikrosphärentypen enthalten.

9. Stoffzusammensetzung nach Anspruch 8, wobei jede Mikrosphärenschicht im wesentlichen nur einen bestimmten Mikrosphärentyp enthält.

10. Stoffzusammensetzung nach Anspruch 8, wobei zumindest eine Schicht der Anzahl Schichten mehr als einen Mikrosphärentyp aufweist.

## Revendications

1. Composition de matière comprenant un support solide qui n'est pas une résine échangeuse d'ions, ledit support présentant des liaisons covalentes, fournies par des ligands de raccordement non polymères, avec au moins un élément choisi dans les sous-groupes (a) et (b), à savoir :
(a) pratiquement une couche unique de microsphères contenant des groupes fonctionnels réactifs résiduels,
(b) plusieurs couches de microsphères, les couches adjacentes desdites plusieurs couches étant liées ensemble de manière covalente par des ligands covalents, la couche la plus interne desdites plusieurs couches ayant lesdites liaisons covalentes dudit support solide reliées à elle et au moins la couche la plus externe desdites plusieurs couches contenant des groupes fonctionnels réactifs résiduels,
lesdites microsphères étant constituées d'une seule espèce de microsphères ou de plus d'une espèce de microsphères et les microsphères ayant un diamètre compris dans l'intervalle allant de 0,03 à 8 µm.

2. Composition de matière selon la revendication 1, à laquelle s'applique au moins l'une des conditions (i), (ii) et (iii) suivantes, à savoir :
(i) lesdites microsphères sont des microsphères de polymère,
(ii) au moins certains desdits groupes fonctionnels réactifs résiduels ont été transformés en d'autres groupes fonctionnels réactifs par des procédés connus en soi, et
(iii) au moins certains desdits groupes fonctionnels réactifs résiduels ont été utilisés pour immobiliser au moins un élément choisi parmi des médicaments, des précurseurs de médicament, des protéines et des cellules biologiques.

3. Composition de matière selon la revendication 1 ou 2, dans laquelle lesdits ligands covalents fournissant lesdites liaisons covalentes provenant du support et lesdits ligands covalents fournissant lesdits liens covalents entre lesdites plusieurs couches sont identiques ou différents les uns des autres.

4. Composition de matière selon la revendication 3, dans laquelle lesdites liaisons covalentes sont fournies par un ligand de raccordement (A) et lesdites plusieurs couches sont liées ensemble de manière covalente par un ligand de raccordement (B), lesdits ligands (A) et (B) étant identiques ou différents l'un de l'autre.

5. Composition de matière selon l'une quelconque des revendications 1 à 4, dans laquelle ladite au moins une espèce est constituée pratiquement d'une seule espèce.

6. Composition de matière selon l'une quelconque des revendications 1 à 4, dans laquelle ladite au moins une espèce est constituée de plus d'une espèce.

7. Composition de matière selon l'une quelconque des revendications 1 à 4, dans laquelle lesdites plusieurs couches sont constituées pratiquement de la même espèce de microsphères.

8. Composition de matière selon l'une quelconque des revendications 1 à 4, dans laquelle lesdites plusieurs couches comprennent différentes espèces de microsphères.

9. Composition de matière selon la revendication 8, dans laquelle chaque couche de microsphères contient pratiquement seulement une espèce particulière de microsphères.

10. Composition de matière selon la revendication 8, dans laquelle au moins une couche desdites plusieurs couches renferme plus d'une espèce de microsphères.
